# EUROPEAN PATENT SPECIFICATION

(11) **EP 1 922 181 B1**
(45) Date of publication and mention of the grant of the patent: **08.12.2010**
(21) Application number: 06795145.9
(22) Date of filing: 19.07.2006
(51) Int. Cl.: B25J 18/06

(54) **MODULE FOR THE MANUFACTURING OF AUTOMATED MOVING STRUCTURE AND AUTOMATED MOVING MODULAR STRUCTURE**
MODUL FÜR DIE HERSTELLUNG EINER AUTOMATISIERTEN BEWEGUNGSSTRUKTUR UND MODULARE STRUKTUR MIT AUTOMATISIERTER BEWEGUNG
MODULE UTILISÉ POUR FABRIQUER DES STRUCTURES MOBILES AUTOMATISEES ET STRUCTURE MODULAIRE MOBILE AUTOMATISÉE

(30) Priority: 20.07.2005 IT MI20051392
(43) Date of publication of application: 21.05.2008
(73) Proprietor: Salpo S.r.l., 34122 Trieste (IT)
(72) Inventor: VACCANI, Lucio, 23900 Lecco (IT)
(74) Representative: Alagem Modiano, Lara S.
(86) International application number: PCT/IB2006/002014
(87) International publication number: WO 2007/010382

(56) References cited:
- FR-A- 2 638 387
- FR-A1- 2 550 985
- FR-A1- 2 745 518
- JP-A- 60 009 676
- US-A- 3 497 083

## Description

### Technical Field

The present invention relates to a module for the manufacturing of automated moving structures and to an automated moving modular structure.

### Background Art

Industrial robots of the programmable type have long been known which are used as a replacement of human beings in performing autonomously and automatically repetitive, complex or dangerous work or operations, such as the handling and movement of objects, tools or instruments.

Industrial robots are used in several industrial sectors, for example to handle parts being machined, handle tools such as welding and/or cutting heads or paint guns, or to assemble or disassemble products, in analysis laboratories, for example to handle dangerous substances, in the medical field, for example to perform diagnostic or surgical procedures, and in other fields.

One of the main mechanical components of an industrial robot is the so-called articulated arm, i.e., the handling element provided with a hand or head for gripping the object, tool or instrument to be moved or handled.

The articulated arms of known robots suffer drawbacks, including the fact that they have low movement speeds; in industrial applications, this causes, for example, disadvantageously long processing or production times.

Another drawback of conventional articulated arm consists in that they do not allow to provide and control complex motion paths.

Another drawback of conventional articulated arm consists in that they are bulky and require a large maneuvering area, and this prevents their use in tight and confined spaces that are difficult to reach.

### Disclosure of the Invention

The aim of the present invention is to eliminate the drawbacks noted above of the articulated arms of industrial robots of the known type by providing a module for providing automated moving structures with high movement speeds.

Within this aim, an object of the present invention is to provide a module for the manufacturing of automated moving structures that allow to provide and control with precision even complex motion paths.

JP-A-60 009 676 discloses a manipulator structure having a quadrilateral link mechanism, including a link bar and a ball screw disposed opposite to each other between pairs of adjacent base boards that cooperatively constitute the quadrilateral link mechanism. The link bar may be pivoted at both ends to respective adjacent base boards. The ball screw has: one end screwed into a ball nut linked through a rotary joint to one base board; and another end linked through a rotary joint to the other base board and operated by a flexible transmission shaft.

US-A-3 497 083 discloses a tensor arm manipulator including a series of plates that are interconnected by universal joints so that the plates may pivot with respect to one another and may be aligned along a common central axis. Each plate has a large central aperture housing a respective universal joint that includes perpendicular pivot axes each intersecting the common central axis, and a plurality of tendons are connected to the plates at selected radial locations which may be selectively pulled for obtaining the desired movement of the plates.

Another object of the present invention is to provide a module for the manufacturing of automated moving structures that are compact and require reduced maneuvering areas, so as to be able to work even in tight and confined spaces or spaces which are difficult to reach.

Another object of the present invention is to provide a module for the manufacturing of automated moving structures that is flexible and can be adapted easily to different uses.

Still another object of the present invention is to achieve said aim and objects with a structure which is simple, relatively easy to provide in practice, safe in use, effective in operation, and relatively low in cost.

In accordance with the invention, there is provided a module for the manufacturing of automated moving structures, and an automated moving modular structure comprising at least one pair of such modules, as defined in the appended claims.

### Brief Description of the Drawings

Further characteristics and advantages of the present invention will become better apparent from the detailed description of a preferred but not exclusive embodiment of a module for the manufacturing of automated moving structures and of an automated moving modular structure according to the invention, illustrated by way of non-limiting example in the accompanying drawings, wherein:

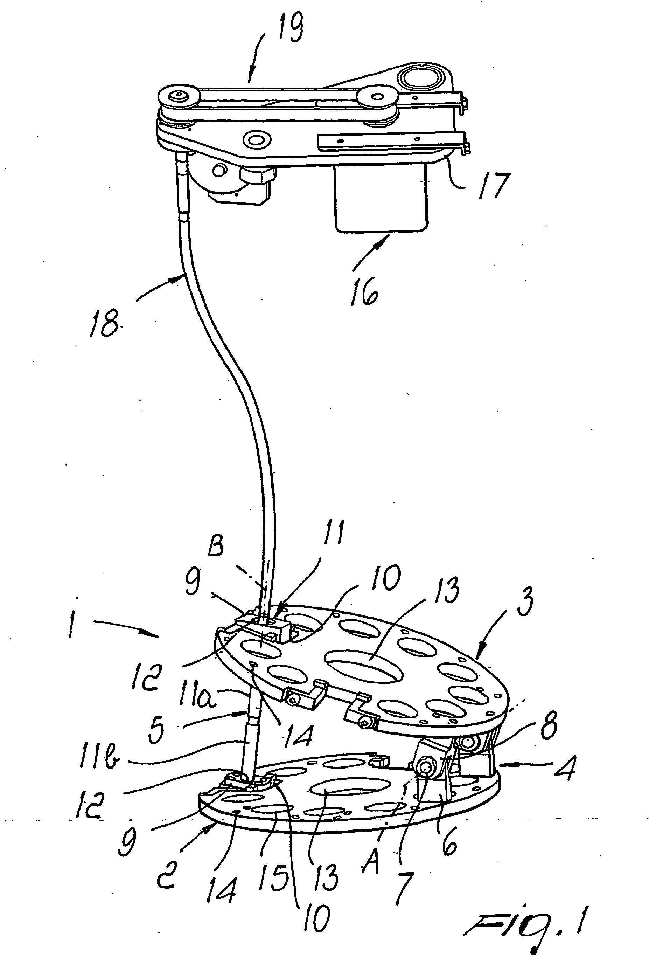

Figure 1 is a perspective view of a module according to the invention, associated with respective motor means with the interposition of transmission means;
Figures 2 and 3 are schematic perspective views of two modules according to the invention, with the hinge means in two different positions;
Figure 4 is a perspective view of an automated moving modular structure according to the invention in the open configuration;
Figure 5 is a perspective view of an automated moving modular structure according to the invention in the closed configuration.

### Ways of carrying out the Invention

With particular reference to the figures, reference numeral 1 generally designates a module for the manufacturing of automated moving structures.

It is specified that in the present description the adjectives "first" and "second" are used only to distinguish the elements that they specify, without this constituting any limitation of the protective scope of the present invention.

The module 1 comprises a first substantially plate-like element, which is constituted by a first plate 2, and a second substantially plate-like element, which is constituted by a second plate 3.

The first plate 2 and the second plate 3 face each other and are mutually articulated so as to oscillate by way of the interposition of hinge means 4. Means 5 for actuating their relative oscillation act between the first plate 2 and the second plate 3.

The hinge means 4 are constituted by a cylindrical hinge, which is provided between the first plate 2 and the second plate 3 and defines an axis A for their mutual oscillation; the relative oscillation axis A is substantially parallel to the planes of arrangement of the first plate 2 and of the second plate 3.

Variation of the relative distance of the hinge means 4, i.e., of the relative oscillation axis A, with respect to the center of the first plate 2 and of the second plate 3, causes a variation of the breadth of oscillation, in particular of the maximum breadth of oscillation, of the two plates, and therefore of distance or extent of the movement between corresponding points of the two plates.

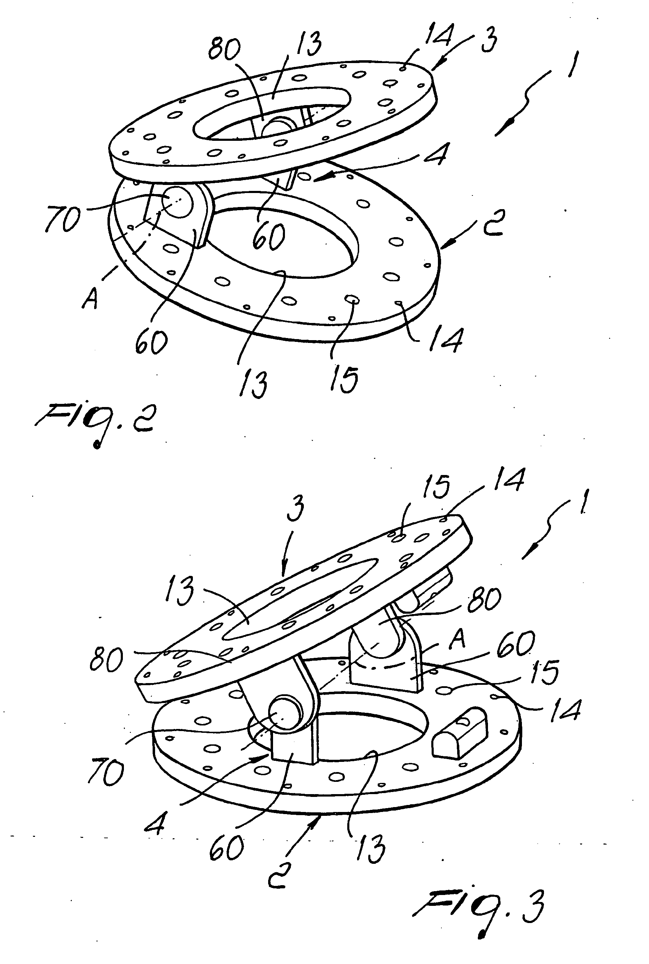

As shown in Figures 2 and 3, the farther the axis of relative oscillation A is spaced from the center of the first plate 2 and of the second plate 3, the greater the possibility of relative movement between the centers of the two plates.

In the illustrated embodiment, the cylindrical hinge comprises two lugs 6, which protrude on the surface of the first plate 2 that faces the second plate 3; each lug supports a pivot 7, the opposite ends whereof protrude in a cantilevered fashion from it in order to mate, with the interposition of rolling bearings, with a corresponding fork 8 which is provided so as to protrude on the surface of the second plate 3 that faces the first plate 2.

However, alternative embodiments of the cylindrical hinge, known to the person skilled in the art, are not excluded; for example, such hinge can be constituted by two supports 60 and 80, which protrude from the mutually facing surfaces of the first plate 2 and of the second plate 3 which support, with the interposition of rolling bearings, a respective articulation pivot 70.

In a preferred embodiment, the actuation means 5 are of the linear type and act along a direction B which is incident with respect to the planes of arrangement of the first plate 2 and of the second plate 3; the expression "actuation means of the linear type" is used to reference actuation means adapted to impart to two points between which they act a linear movement along a preset direction of mutual approach and/or spacing.

If the actuation means 5 are of the linear type, they act between two corresponding points of the first plate 2 and of the second plate 3, so that when the distance between said points varies, so does the aperture angle of the module 1, i.e., the angle formed between the mutually facing surfaces of the first plate 2 and of the second plate 3.

As the breadth of the aperture angle of the module 1 varies, so does the arrangement of the direction B; in order to assist this variation of arrangement, the opposite ends of the actuation means 5 of the linear type are associated with a respective supporting element 9, which is articulated, so that it can oscillate about an axis which is -substantially parallel to the relative oscillation axis A, respectively to the first plate 2 and to the second plate 3.

Conveniently, the first plate 2 and the second plate 3 comprise a respective through seat 10 for accommodating and allowing the oscillation of the corresponding supporting element 9.

In a preferred embodiment, the actuation means 5 of the linear type comprise a shaft 11, which has, at its opposite ends, two threaded portions 11a and 11b, which have mutually opposite threads, a left-handed one and a right-handed one, not shown, and are coupled to corresponding female threads 12, for example of the ballscrew type, which are rigidly associated with the respective supporting element 9, the shaft 11 being adapted to be turned in the two opposite directions.

Since the female threads 12 are rigidly coupled to the respective supporting element 9, by turning the shaft 11 in one direction or in the opposite direction the female threads 12 slide on the respective portion 11a and 11b, moving mutually closer or farther apart, and therefore moving closer or farther apart the first plate 2 and the second plate 3 with respect to each other, thus changing the aperture angle of the module 1.

However, alternative embodiments of the actuation means are not excluded; if they are of the linear type, they can be for example of the type operated by a fluid medium, such as hydraulic or pneumatic cylinders.

For example, the actuation means might also be of the nonlinear type, such as cams or articulated parallelogram systems.

The first plate 2 and the second plate 3 are substantially circular and comprise a central opening 13 for the containment and passage of service systems or parts thereof, such as for example optical fibers, pipes, cables or others.

The first plate 2 and the second plate 3 further have at least one reference hole 14 for positioning in series another module 1; preferably, the first plate 2 and the second plate 3 comprise a plurality of reference holes 14, which are distributed with a constant spacing along a first circumference that is substantially concentric thereto.

As will become better apparent from the description that follows, in a preferred embodiment the first plate 2 and the second plate 3 further comprise at least one passage hole 15 for means for transmitting motion to the actuation means 5. In another preferred embodiment, the first plate 2 and the second plate 3 comprise a plurality of passage holes 15, which are distributed, with a constant spacing, along a second circumference which is concentric thereto and has a radius which is conveniently shorter than the radius of the first circumference along which the positioning holes 14 are distributed.

The first plate 2 and the second plate 3 are provided with support or anchoring elements. Such support or anchoring elements are used in the case of complex structures formed by a large number of elements. For example, an articulated structure designed to inspect sewers, which are predominantly arranged horizontally, cannot stand only on its footing. In this case, it is convenient to arrange on certain plates pairs of supporting feet mounted on simple on-off actuators, which allow to support the weight and must be extracted and retracted in step, for example in the following manner.

While two pairs of feet are resting, the pair of intermediate raised feet advances by way of the extension of the preceding vertebrae and of the contraction of the subsequent vertebrae (as in the motion of a caterpillar).

The anchoring elements can instead have a dual function, similar to the preceding one, if the structure has a considerable vertical extension and is unable to maintain sufficient rigidity, for example underwater welding at great depths, or whenever the tool mounted on the head applies force to the structure itself; for example, a drilling head or a milling head performs more precise machining if it has anchoring elements adapted to rigidly couple the head to the part to be machined.

The module 1 further comprises motor means, which are associated with the actuation means 5 and are adapted to move them in the two opposite directions; if the actuation means 5 are of the linear type, in the opposite directions for increasing and reducing the relative distance between the two points of the first plate 2 and of the second plate 3 between which they act, in order to produce the relative oscillation of the first plate 2 and of the second plate 3.

Means for transmitting motion from the motor means to the actuation means 5 are further provided.

In a possible embodiment, the motor means are remote with respect to the actuation means 5 and are constituted by a motor 16 of the reversible type, which is supported by a bracket 17, and the transmission means are constituted by a flexible shaft 18, which receives at one end the motion from the motor 16, by way of the interposition of belt drive means 19, and whose opposite end is associated with the actuation means 5.

Conveniently, the bracket 17 is associated with a frame, not shown, which can move so as to compensate the length variations of the corresponding flexible shaft 18.

Each flexible shaft 18 is inserted in a corresponding passage hole 15 of the first plate 2 and of the second plate 3.

In another possible embodiment, the motor means and any transmission means are local with respect to the actuation means 5 and are supported by said first plate 2 and/or by said second plate 3.

By articulating two or more modules 1 in series with respect to each other, automated moving modular structures 20 are provided, such as for example articulated arms for handling or moving objects, parts, tools or instruments.

The second plate 3 of a module 1 of the structure 20 coincides with the first plate 2 of the module 1 that follows it.

A supporting footing and a conventional grip head can be associated respectively with the two end modules 1 of the structure 20.

With particular reference to the embodiment shown in the accompanying figures, the operation of the invention is as follows.

In order to mount a single module 1, it is necessary to mate the pivots 7 supported by the lugs 6 of the first plate 2 with the forks 8 that protrude from the second plate 3 and thus constitute the cylindrical hinge.

The two portions 11a and 11b of the shaft 11 are then inserted in the corresponding female threads 12 of the first plate 2 and of the second plate 3.

The shaft 11 is then coupled to one end of the corresponding flexible shaft 18, the opposite end whereof is connected to the motor 16 by way of the belt drive means 19.

By actuating the motor 16 it is possible to turn the flexible shaft 18, and accordingly the shaft 11 in one direction or in the opposite direction. A rotation in one direction or the other of the shaft 11 is matched by a mutual approach or spacing of the female threads 12 and therefore of the first plate 2 and of the second plate 3; a presettable and controlled movement is thus provided.

In order to assemble a structure 20 it is necessary to assemble in succession a plurality of modules 1 arranged in series.

With the aid of the reference holes 14, it is possible to orient according to a presettable criterion two successive modules 1 and therefore their relative oscillation axes A; different combinations allow to provide different possibilities of movement of the structure 20.

In order to change the mobility of the structure 20 it is also possible to couple modules 1 characterized by different distances between the oscillation axis A and the center of the respective first and second plates 2 and 3.

The actuation means 5 of each module 1 are further connected to the respective motor 16 by means of a corresponding flexible shaft 18, each module 1 being actuated autonomously.

The flexible shafts 18 are inserted within the passage holes 15 of each module 1 and reach the modules that follow it.

The brackets 17 that support the actuation motors 16 of the individual modules 1 are conveniently supported movably by a footing, so as to compensate for any movement of the structure 20.

A grip and handling head can be rigidly coupled to the free end of the structure 20.

By actuating the motors 16 according to a preset program it is possible to impart each module 1 a given oscillation and therefore a presettable movement; the movement of the structure 20 is determined by the composition of the oscillations and movements of each module 1 that composes it.

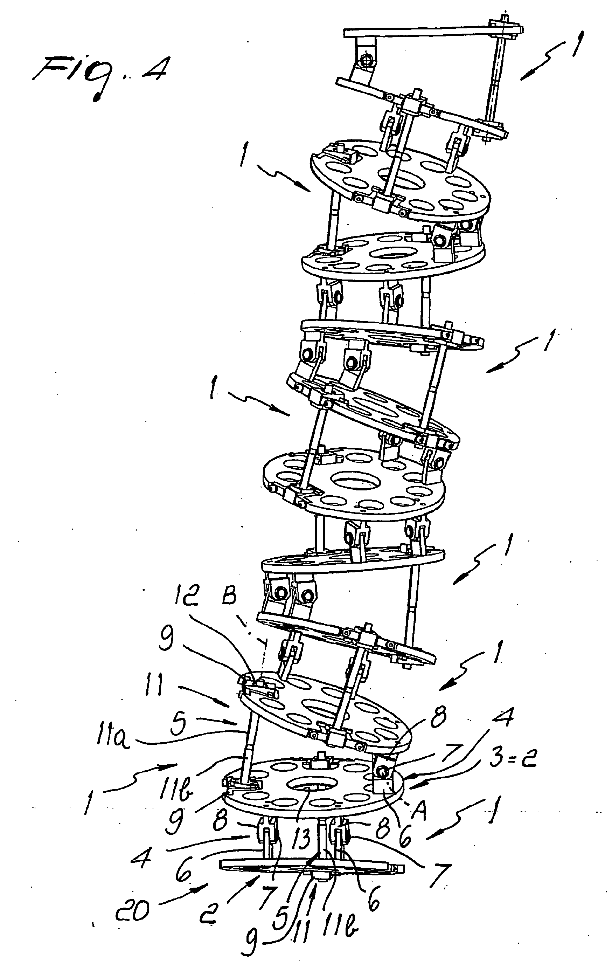

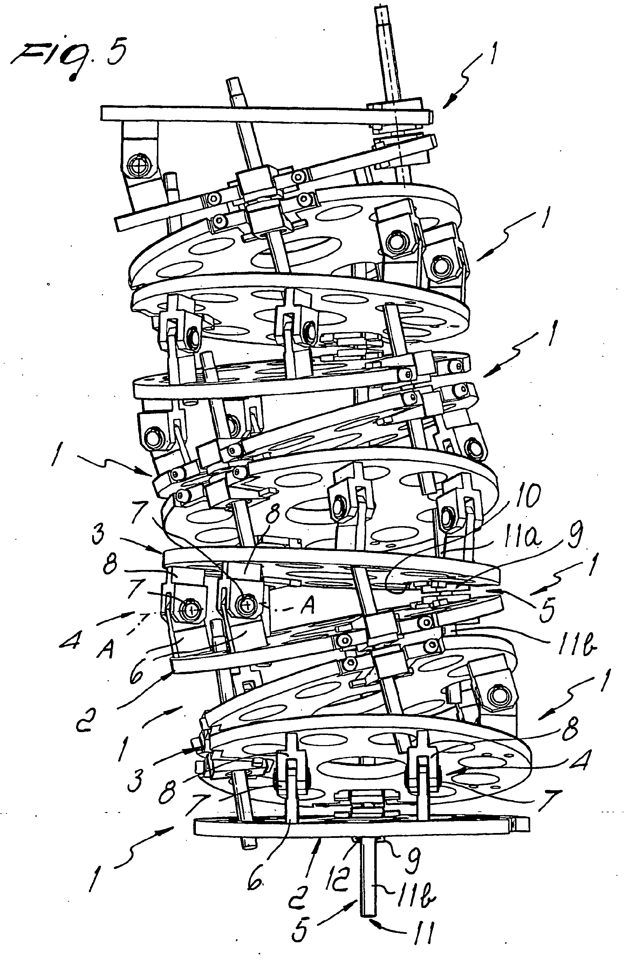

Figure 4 is a view of a structure 20 in the open configuration, i.e., in the configuration of maximum extension, in which the aperture angle of each module 1 that composes it has the maximum possible breadth, whereas Figure 5 shows a structure 20 in a closed configuration, i.e., a configuration of minimum extension, in which the aperture angle of each module 1 that composes it has the minimum possible breadth.

In practice it has been found that the described invention achieves the intended aim and objects.

The module according to the invention in fact allows to provide automated moving modular structures that have a very high speed of motion and allow to provide and control precisely even complex paths.

The automated moving modular structures according to the present invention are compact, require small maneuvering areas, and easily reach even tight and confined spaces.

The automated moving modular structures according to the present invention are flexible, can adapt easily to different applications and can be adapted for moving tools, such as for example laser -or- water-jet cutting heads, or for handling instruments in the medical field.

The automated moving modular structures according to the present invention are adapted to be miniaturized in order to be applied in particular in the medical field.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A module (1) for the manufacturing of automated moving structures, comprising a first substantially plate-like element (2) and a second substantially plate-like element (3), which face each other and are mutually articulated so that they can oscillate by way of the interposition of hinge means (4) and means (5) for actuating the relative oscillation of said first and second substantially plate-like elements (2,3), said hinge means (4) comprising a cylindrical hinge, which is provided between said first substantially plate-like element (2) and said second substantially plate-like element (3) and defines one single axis (A) for their relative oscillation such that said oscillation axis (A) is substantially parallel and distal to both of the planes of arrangement of said first and second substantially plate-like elements (2,3), said actuation means (5) being of the linear type and acting along a direction (B) which is incident with respect to the planes of arrangement of said first and second substantially plate-like elements (2,3), said actuation means (5) of the linear type having opposite ends (11a, 11b) associated with a respective supporting element (9), which is articulated so that it can oscillate about an axis which is substantially parallel to said relative oscillation axis (A) respectively to said first substantially plate-like element (2) and to said second substantially plate-like element (3), each one of said first and second substantially plate-like elements (2,3) comprising a through seating (10) for accommodating and allowing the oscillation of said respective supporting element (9), and said actuation means (5) of the linear type comprising a shaft (11) which has, at its opposite ends, two threaded portions (11a, 11b) with mutually opposite threads, which are coupled to corresponding female threads (12) rigidly associated with said respective supporting element (9), said shaft (11) being adapted to be turned in the two opposite directions.

2. The module (1) according to claim 1, **characterized in that** said actuation means of the linear type are of the type operated by a fluid medium.

3. The module (1) according to one or more of the preceding claims, **characterized in that** each of said first and second substantially plate-like elements (2,3) is substantially circular.

4. The module (1) according to one or more of the preceding claims, **characterized in that** each of said first and second substantially plate-like elements (2,3) comprises a central opening (13) for the containment and passage of service systems or parts thereof.

5. The module (1) according to one or more of the preceding claims, **characterized in that** each of said first and second substantially plate-like elements (2,3) comprises at least one reference hole (14) for the positioning of another said module (1).

6. The module (1) according to claim 5, **characterized in that** each of said first and second substantially plate-like elements (2,3) comprises a plurality of said reference holes (14), distributed along a first circumference which is substantially concentric thereto.

7. The module (1) according to one or more of the preceding claims, **characterized in that** each of said first and second substantially plate-like elements (2,3) comprises respective supporting or anchoring elements.

8. The module (1) according to one or more of the preceding claims, **characterized in that** it comprises motor means (16) associated with said actuation means (5).

9. The module (1) according to claim 8, **characterized in that** it comprises motion transmission means (18) which are interposed between said motor means (16) and said actuation means (5).

10. The module (1) according to claim 8 or 9, **characterized in that** said motor means (16) are remote with respect to said actuation means (5).

11. The module (1) according to claims 9 and 10, **characterized in that** said transmission means comprise a flexible shaft (18), which is turned by said motor means (16) and is associated at one end with said actuation means (5).

12. The module (1) according to claim 9 or 11, **characterized in that** each of said first and second substantially plate-like elements (2,3) comprises at least one hole (15) for the passage of said transmission means (18).

13. The module (1) according to claim 12, **characterized in that** each of said first and second substantially plate-like elements (2,3) comprises a plurality of said passage holes (15), distributed along a second circumference which is concentric thereto.

14. The module (1) according to claim 8 or 9, **characterized in that** said motor means and said transmission means are local with respect to said actuation means.

15. An automated moving modular structure (2), **characterized in that** it comprises at least one pair of modules (1) according to one or more of claims 1 to 14 arranged in series on each other, the second substantially plate-like element (3) of one of the modules (1) of said pair coinciding with the first substantially plate-like element (2) of the other module (1) of said pair.

16. The structure according to claim 15, **characterized in that** it comprises a plurality of said modules (1) arranged in series, the second substantially plate-like element (3) of one of the modules (1) of said series coinciding with the first substantially plate-like element (2) of the module (1) that follows it.

17. The structure according to claim 15 or 16, **characterized in that** it comprises a base associated with one of the two end modules (1) of said pair or of said series.

18. The structure according to one or more of claims 15 to 17, **characterized in that** it comprises a grip head, which is associated with one of the two end modules (1) of said pair or of said series.

## Patentansprüche

1. Ein Modul (1) zur Herstellung automatisierter beweglicher Strukturen, der ein erstes im Wesentlichen plattenartiges Element (2) und ein zweites im Wesentlichen plattenartiges Element (3) umfasst, die einander gegenüberliegen und gelenkig miteinander verbunden sind, so dass sie schwingen können durch Zwischenanordnung von Scharniermitteln (4) und Mitteln (5) zur Betätigung der relativen Schwingung des ersten und des zweiten im Wesentlichen plattenartigen Elements (2, 3), wobei die Scharniermittel (4) ein zylinderförmiges Scharnier umfassen, das zwischen dem ersten im Wesentlichen plattenartigen Element (2) und dem zweiten im Wesentlichen plattenartigen Element (3) angeordnet ist und eine einzige Achse (A) für ihre relative Schwingung bestimmt, so dass die Schwingungsachse (A) im Wesentlichen parallel und distal zu beiden Anordnungsebenen des ersten und des zweiten im Wesentlichen plattenartigen Elements (2, 3) ist, wobei die Betätigungsmittel (5) vom linearen Typ sind und entlang einer Richtung (B) arbeiten, die auf die Anordnungsebenen des ersten und des zweiten im Wesentlichen plattenartigen Elements (2, 3) auftritt, wobei die Betätigungsmittel (5) vom linearen Typ einander gegenüberliegende Enden (11a, 11b) haben, die mit einem jeweiligen tragenden Element (9) verbunden sind, das gelenkig ist, so dass es um eine Achse schwingen kann, die im Wesentlichen parallel zu der relativen Schwingungsachse (A) beziehungsweise zu dem ersten im Wesentlichen plattenartigen Element (2) und dem zweiten im Wesentlichen plattenartigen Element (3) ist, wobei sowohl das erste als auch das zweite im Wesentlichen plattenartige Element (2, 3) einen durchgehenden Sitz( (10) umfassen, um das jeweilige tragende Element (9) aufzunehmen und um seine Schwingung zu ermöglichen, und wobei die Betätigungsmittel (5) vom linearen Typ eine Welle (11) umfassen, die an ihren gegenüberliegenden Enden zwei Gewindeabschnitte (11a, 11b) mit einander gegenüberliegenden Gewinden hat, die mit entsprechenden Innergewinden (12) gekoppelt sind, welche starr mit dem jeweiligen tragenden Element (9) verbunden sind, und wobei die Welle (11) ausgebildet ist, um in die zwei entgegengesetzte Richtungen gedreht zu werden.

2. Der Modul (1) gemäß Anspruch 1, **dadurch gekennzeichnet, dass** die Betätigungsmittel vom linearen Typ von dem. Typ sind, der von einem Fluidmedium betätigt wird.

3. Der Modul (1) gemäß einem oder mehreren der obigen Anspruche, **dadurch gekennzeichnet, dass** sowohl das erste als auch das zweite im Wesentlichen plattenartige Element (2, 3) im Wesentlichen kreisförmig ist.

4. Der Modul (1) gemäß einem oder mehreren der obigen Anspruche, **dadurch gekennzeichnet, dass** sowohl das erste als auch das zweite im Wesentlichen plattenartige Element (2, 3) eine zentrale Öffnung (13) umfassen, zum Halten und Durchlassen von Service-Systemen oder Teilen davon.

5. Der Modul (1) gemäß einem oder mehreren der obigen Ansprüche, **dadurch gekennzeichnet, dass** sowohl das erste als auch das zweite im Wesentlichen plattenartige Element (2, 3) mindestens ein Bezugsloch (14) zur Positionierung eines anderen Moduls (1) umfassen.

6. Der Modul (1) gemäß Anspruch 5, **dadurch gekennzeichnet, dass** sowohl das erste als auch das zweite im Wesentlichen plattenartige Element (2, 3) eine Vielzahl der Bezugslöcher (14) umfassen, die entlang einem ersten Umfang verteilt sind, der im Wesentlichen konzentrisch damit ist.

7. Der Modul (1) gemäß einem oder mehreren der obigen Ansprüche, **dadurch gekennzeichnet, dass** sowohl das erste als auch das zweite im Wesentlichen plattenartige Element (2, 3) jewelige tragende oder Verankerungselemente umfassen.

8. Der Modul (1) gemäß einem oder mehreren der obigen Ansprüche, **dadurch gekennzeichnet, dass** er mit den Betätigungsmitteln (5) verbundene Motormittel (16) umfasst.

9. Der Modul (1) gemäß Anspruch 8, **dadurch gekennzeichnet, dass** er Bewegungsübertragungsmittel (18) umfasst, die zwischen den Motormitteln (16) und den Betätigungsmitteln (5) angeordnet sind.

10. Der Modul (1) gemäß Anspruch 8 oder 9, **dadurch gekennzeichnet, dass** die Motormittel (16) in Bezug auf die Betätigungsmittel (5) entfernt sind.

11. Der Modul (1) gemäß Anspruch 9 und 10, **dadurch gekennzeichnet, dass** die übertragungsmittel eine biegsame Welle (18) umfassen, die von den Motormitteln (16) gedreht wird und an einem Ende mit den Betätigungsmitteln (5) verbunden ist.

12. Der Modul (1) gemäß Anspruch 9 oder 11, **dadurch gekennzeichnet, dass** sowohl das erste als auch das zweite im Wesentlichen plattenartige Element (2, 3) mindestens ein Loch (15) für das Durchlassen der übertragungsmittel (18) umfasst.

13. Der Modul (1) gemäß Anspruch 12, **dadurch gekennzeichnet, dass** sowohl das erste als auch das zweite im Wesentlichen plattenartige Element (2, 3) eine Vielzahl der Durchlasslöcher (15) umfassen, die entlang einem zweiten Umfang verteilt sind, der konzentrisch damit ist.

14. Der Modul (1) gemäß Anspruch 8 oder 9, **dadurch gekennzeichnet, dass** die Motormittel und die Übertragungsmittel lokal in Bezug zu den Betätigungsmitteln sind.

15. Eine automatisierte bewegliche modulare Struktur (2), **dadurch gekennzeichnet, dass** sie mindestens ein Paar von Modulen (1) gemäß einem oder mehreren der Ansprüche 1 bis 14 umfasst, die seriell aufeinander angeordnet sind, wobei das zweite im Wesentlichen plattenartige Element (3) eines der Module (1) des Paars mit dem ersten im Wesentlichen plattenartigen Element (2) des anderen Moduls (1) des Paars zusammenfällt.

16. Die Struktur gemäß Anspruch 15, **dadurch gekennzeichnet, dass** sie eine Vielzahl der Module (1) umfasst, die seriell angeordnet sind, wobei das zweite im Wesentlichen plattenartige Element (3) eines der Module (1) der Serie mit dem ersten im Wesentlichen plattenartigen Element (2) des Moduls (1), das ihm folgt, zusammenfällt.

17. Die Struktur gemäß Anspruch 15 oder 16, **dadurch gekennzeichnet, dass** sie eine Basis umfasst, die mit einem der zwei Endmodule (1) des Paares oder der Serie verbunden ist.

18. Die Struktur gemäß einem oder mehreren der Ansprüche 15 bis 17, **dadurch gekennzeichnet, dass** sie einen Greifkopf umfasst, der mit einem der zwei Endmodule (1) des Paares oder der Serie verbunden ist.

## Revendications

1. Module (1) destiné à la fabrication de structures mobiles automatisées comprenant un premier élément essentiellement en forme de plaque (2) et un second élément essentiellement en forme de plaque (3), qui sont tournés l'un vers l'autre et articulés l'un à l'autre de manière à pouvoir osciller grâce à l'interposition de moyens d'articulation (4) et de moyens (5) destinés à l'actionnement de l'oscillation relative desdits premier et second éléments essentiellement en forme de plaque (2, 3), lesdits moyens d'articulation (4) comprenant une articulation cylindrique qui est prévue entre ledit premier élément essentiellement en forme de plaque (2) et ledit second élément essentiellement en forme de plaque (3) et définit un seul axe (A) pour leur oscillation relative de manière à ce que ledit axe d'oscillation (A) soit essentiellement parallèle et distal par rapport aux deux plans sur lesquels sont disposés lesdits premier et second éléments essentiellement en forme de plaque (2, 3), lesdits moyens d'actionnement (5) étant de type linéaire et agissant le long d'une direction (B) qui est incidente par rapport aux plans sur lesquels sont disposés lesdits premier et second éléments essentiellement en forme de plaque (2, 3), lesdits moyens d'actionnement (5) de type linéaire présentant des extrémités opposées (11a, 11b) associées respectivement à un élément support (9) qui est articulé de manière à pouvoir osciller autour d'un axe qui est essentiellement parallèle audit axe d'oscillation relative (A) par rapport audit premier élément essentiellement en forme de plaque (2) et audit second élément essentiellement en forme de plaque (3) respectivement, chacun des premier et second éléments essentiellement en forme de plaque (2, 3) comprenant un logement traversant (10) destiné à recevoir et à permettre l'oscillation dudit élément support respectif (9) et lesdits moyens d'actionnement (5) de type linéaire comprenant un arbre (11), dont les extrémités opposées sont munies de deux portions filetées (11a, 11b) avec des filetages opposés l'un à l'autre, filetages qui sont couplés à des filetages intérieurs (12) associés de façon rigide audit élément support respectif (9), ledit arbre (11) étant adapté à être tourné dans les deux directions opposées.

2. Module (1) suivant la revendication 1, **caractérisé en ce que** lesdits moyens d'actionnement de type linéaire appartiennent au genre actionné par un milieu fluide.

3. Module (1) suivant une ou plusieurs des revendications précédentes, **caractérisé en ce que** chacun desdits premier et second éléments essentiellement en forme de plaque (2, 3) est essentiellement circulaire.

4. Module (1) suivant une ou plusieurs des revendications précédentes, **caractérisé en ce que** chacun desdits premier et second éléments essentiellement en forme de plaque (2, 3) comprend une ouverture centrale (13) destinée à contenir et à permettre le passage de circuits ou de parties de ceux-ci.

5. Module (1) suivant une ou plusieurs des revendications précédentes, **caractérisé en ce que** chacun desdits premier et second éléments essentiellement en forme de plaque (2, 3) comprend au moins un trou repère (14) pour le positionnement d'un autre audit module (1).

6. Module (1) suivant la revendication 5, **caractérisé en ce que** chacun desdits premier et second éléments essentiellement en forme de plaque (2, 3) comprend une pluralité desdits trous repère (14) répartis le long d'une première circonférence essentiellement concentrique par rapport à ceux-ci.

7. Module (1) suivant une ou plusieurs des revendications précédentes, **caractérisé en ce que** chacun desdits premier et second éléments essentiellement en forme de plaque (2, 3) comprend des éléments support ou d'ancrage respectifs.

8. Module (1) suivant une ou plusieurs des revendications précédente, **caractérisé en ce qu'**il comprend des moyens d'entraînement (16) associés auxdits moyens d'actionnement (5).

9. Module (1) suivant la revendication 8, **caractérisé en ce qu'**il comprend des moyens de transmission de mouvement (18) qui sont interposés entre lesdits moyens d'entraînement (16) et lesdits moyens d'actionnement (5).

10. Module (1) suivant la revendication 8 ou 9, **caractérisé en ce que** lesdits moyens d'entraînement (16) sont à distance par rapport auxdits moyens d'actionnement (5).

11. Module (1) suivant les revendications 9 et 10, **caractérisé en ce que** lesdits moyens de transmission comprennent un arbre flexible (18) qui est tourné par lesdits moyens d'entraînement (16) et dont une extrémité est associée auxdits moyens de mise en action (5).

12. Module (1) suivant la revendication 9 ou 11, **caractérisé en ce que** chacun desdits premier et second éléments essentiellement en forme de plaque (2, 3) comprend au moins, un trou (15) pour le passage desdits moyens de transmission (18).

13. Module (1) suivant la revendication 12, **caractérisé en ce que** chacun desdits premier et second éléments essentiellement en forme de plaque (2, 3) comprend une pluralité desdits trous de passage (15) répartis le long d'une seconde circonférence qui est concentrique, par rapport à ceux-ci.

14. Module (1) suivant la revendication 8 ou 9, **caractérisé en ce que** lesdits moyens d'entraînement et lesdits moyens de transmission sont locaux par rapport audits moyens d'actionnement.

15. Structure modulaire mobile automatisée (2), **caractérisée en ce qu'**elle comprend au moins une paire de modules (1) suivant une ou plusieurs des revendications 1 à 14, modules qui sont disposés en série l'un sur l'autre, le second élément essentiellement en forme de plaque (3) d'un des modules (1) de ladite paire coïncidant avec le premier élément essentiellement en forme de plaque (2) de l'autre module de ladite paire.

16. Structure suivant la revendication 15, **caractérisée en ce qu'**elle comprend une pluralité desdits modules (1) disposés en série, le second élément essentiellement en forme de plaque (3) de l'un des modules (1) desdites séries coïncidant avec le premier élément essentiellement en forme de plaque (2) du module (1) qui le suit.

17. Structure suivant la revendication 15 au 16, **caractérisée en ce qu'**elle comprend une base associée à l'un des deux modules d'extrémité (1) de ladite paire ou desdites séries.

18. Structure suivant une ou plusieurs de revendications 15 à 17, **caractérisée en ce qu'**elle comprend une tête de préhension qui est associée à l'un des deux modules d'extrémité (1) de ladite paire ou desdites séries.
